(19) Europäisches Patentamt / European Patent Office / Office européen des brevets

(11) **EP 1 897 088 B1**

(12) **EUROPEAN PATENT SPECIFICATION**

(45) Date of publication and mention
of the grant of the patent:
**31.12.2008 Bulletin 2009/01**

(51) Int Cl.:
*G11B 7/0065* (2006.01)     *G11B 7/24* (2006.01)

(21) Application number: **06756118.3**

(22) Date of filing: **12.06.2006**

(86) International application number:
**PCT/IB2006/051868**

(87) International publication number:
**WO 2006/136968 (28.12.2006 Gazette 2006/52)**

(54) **REFLECTIVE HOLOGRAPHIC DATA STORAGE CARRIER**

TRÄGER FÜR REFLEKTIERENDEN HOLOGRAFISCHEN DATENSPEICHER

SUPPORT DE STOCKAGE DE DONNEES HOLOGRAPHIQUES REFLECHISSANT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **24.06.2005 EP 05300507**

(43) Date of publication of application:
**12.03.2008 Bulletin 2008/11**

(73) Proprietor: **Koninklijke Philips Electronics N.V.
5621 BA Eindhoven (NL)**

(72) Inventors:
• **HIKMET, Rifat Ata Mustafa
75008 Paris (FR)**
• **BALISTRERI, Marcello Leonardo Mario
75008 Paris (FR)**
• **'T HOOFT, Gert
75008 Paris (FR)**

(74) Representative: **Uittenbogaard, Frank
Philips
Intellectual Property & Standards
P.O. Box 220
5600 AE Eindhoven (NL)**

(56) References cited:
EP-A2- 1 542 219          US-A1- 2001 024 415
US-A1- 2003 039 001       US-A1- 2004 165 518

**Description**

FIELD OF THE INVENTION

The present invention relates to a reflective holographic data storage carrier.

BACKGROUND OF THE INVENTION

Documents US-A-2003/039001 and US-A-2004/165518 disclose holographic data storage devices using a reflective holographic data storage carrier.

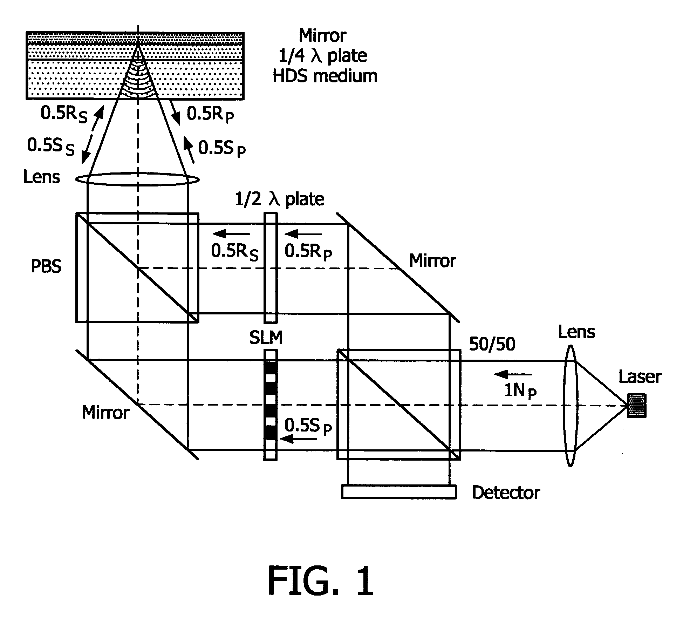

Figure 1 shows a schematic embodiment of such a holographic data storage device.

A p-polarized laser beam $N_p$ is split into a reference beam $R_p$ and a signal beam $S_p$ using a 50/50 beam splitter. The information can be stored by modulating the amplitude in the signal branch with a pixelated spatial light modulator SLM. A half-wave plate is used in the reference branch to convert the p-polarization in s-polarization. The reference beam $(0,5R_s)$ and the signal beam $(0,5S_p)$ are directed towards the recording medium through a polarizing beam splitter PBS.

The holographic data storage carrier consists, in the forward propagating direction z, of a holographic data storage (HDS) medium made of a photosensitive layer, a quarter-wave plate layer, and a reflecting layer or mirror. The s-polarized reference $0.5R_s$ and p-polarized signal $0.5Sp$ beams are both focused on the reflecting layer and respectively reflected as p-polarized reference $0.5R_p$ and s-polarized signal $0.5S_s$ beams after having crossed through twice the quarter-wave plate. The forward s-polarized reference beam $0.5R_s$ interferes with the backward s-polarized signal beam $0.5S_s$, resulting in a first hologram recorded in the HDS medium. The backward p-polarized reference beam $0.5R_p$ interferes with the forward p-polarized signal beam $0.5S_p$, resulting in a second identical hologram.

No interference occurs between the forward s-polarized reference beam $0.5R_s$ with the backward p-polarized reference beam $0.5R_p$. Also, no interference occurs between the forward p-polarized signal beam $0.5S_p$ with the backward s-polarized signal beam $0.5S_s$.

However, when it is carried out with conventional uniaxial quarter-wave plates, this reflective holographic data storage carrier turns out to be effective only with low numerical aperture (NA) optics, typically $NA \leq 0.4$, but not for high numerical aperture optics with $0.4 < NA \leq 1$. This is due to the fact that the efficiency of the conversion of p in s and s in p-polarizations is strongly angular dependent with uniaxial quarter-wave plates. Indeed, for NA=0.4 (angle of 24°), 98% of p-polarized light is converted in s-polarized light while 2% remains p-polarized. But for NA=0.75 (angle of 49°), only 50% of p-polarized light is converted in s-polarized light while 50% remains p-polarized.

SUMMARY OF THE INVENTION

It is thus an object of the invention to propose a reflective holographic data storage carrier capable of providing a polarization conversion which would be much less sensitive to angular variations than the known carrier.

To this end, the invention provides a reflective holographic data storage carrier comprising a photosensitive layer, a reflecting layer and a quarter-wave plate layer disposed between said photosensitive layer and said reflective layer, said quarter-wave plate layer being made of a biaxial material wherein $n_x$, $n_y$ and $n_z$ refractive indices verify :

$$n_x > n_z > n_y \qquad \text{and} \qquad n_z = n_y + N_z(n_x - n_y)$$

where z is a direction perpendicular to said layers and $N_z$ ranges between 0.35 and 0.65.

Actually, it will be shown later on that a biaxial plate used as a quarter-wave plate and fulfilling the above-mentioned conditions exhibits a retardation difference which varies slowly as a function of the angle of incidence of light rays with respect to the direction z of propagation of the central ray.

These and other aspects of the invention will be apparent from and will be elucidated with reference to the embodiments described hereinafter.

BRIEF DESCRIPTION OF THE DRAWINGS

The invention will now be described in more detail by way of example with reference to the accompanying drawings in which :

Figure 1 shows an embodiment of a reflective holographic data storage device in accordance with the prior art.

Figure 2 is a view in perspective of a reflective holographic data storage carrier in accordance with the invention.

Figure 3 is a graph showing the variations of the retardation difference $\Delta\phi$ as a function of the angle of incidence $\theta$ and the parameter $N_z$.

Figure 4 is a graph showing the variations of the numerical aperture NA as a function of the parameter $N_z$ for a rim conversion efficiency of 90%.

## DETAILED DESCRIPTION OF THE INVENTION

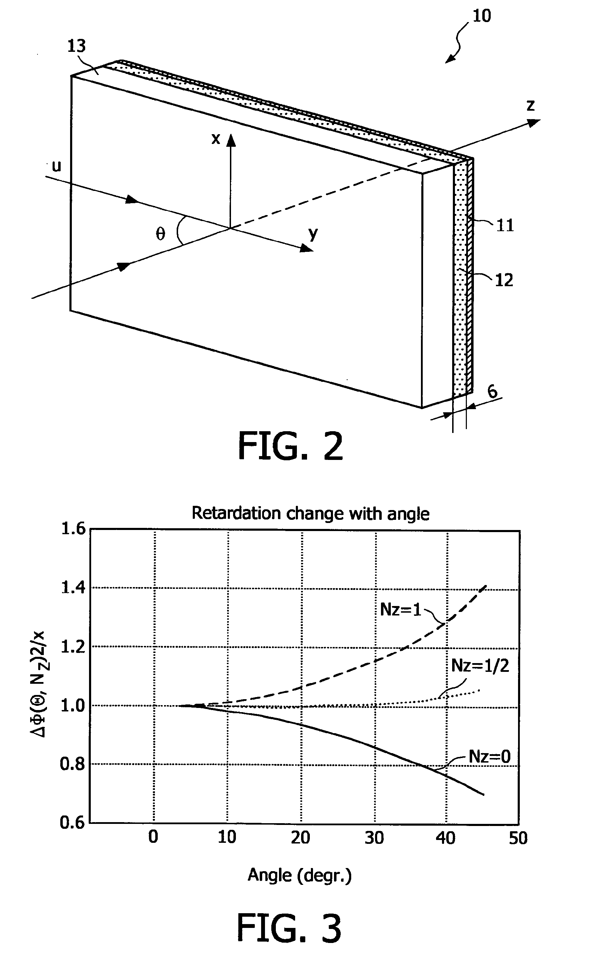

In Figure 2 is shown a reflective holographic data storage carrier 10 intended to be incorporated in a holographic data storage device.

This carrier 10 comprises three layers.

The first layer 11 is a reflecting layer designed to cause incident forward beams to reflect backwards in order to interfere with incident beams having same polarization, as explained with reference to Figure 1.

The second layer 12 is a quarter-wave plate layer disposed over said reflecting layer 11. Due to the reflection on the reflecting layer 11, this quarter-wave plate 12 is crossed through twice by the incident beams, thus acting as a half-wave plate so as to convert p in s-polarizations and vice versa and make compatible the polarizations of the beams which are to interfere.

The third layer 13 is a photosensitive layer disposed over said quarter-wave plate layer 12 and constitutes the HDS medium. Information is stored in said photosensitive layer 13 as holographic patterns resulting from interferences between reference and signal beams, as also explained with reference to Figure 1.

The quarter-wave plate layer 12 is made of a biaxial material the principal directions of which are referred to as x, y and z in Figure 2. z is perpendicular to the layers and represents the propagation direction of the central ray of the incident beams.

Three orthogonal eigenvalues $n_x$, $n_y$ and $n_z$ of the refractive index of the biaxial material are associated with the three principal directions x, y and z of the quarter-wave plate 12.

The orientation of the quarter-wave plate layer 12 is chosen so that:

$$n_x > n_z > n_y$$

In addition, the three refractive indices are linked by the following equations :

$$n_x = n_y + \Delta n \quad \textbf{and} \quad n_z(N_z) = n_y + N_z(n_x - n_y) = n_y + N_z.\Delta n$$

where $N_z$ ranges between 0 and 1.

The thickness t of the plate 12 is such that:

$$\Delta\Phi = 2\pi.\Delta n.t/\lambda = \pi/2$$

The central ray of an incident beam runs along the z-axis and the two orthogonal polarizations along the x and y-axis experience a retardation difference exactly equal to $\Delta\phi = \pi/2$. This means that for this central ray the conversion efficiency of p or s-polarization in s or p-polarization is 100%. This is also roughly true for rays running along the u-axis under a small angle of incidence $\theta$, the u-axis being taken in the xz plane in Figure 2. As a consequence, incident beams with low numerical aperture, e.g. NA$\leq$0.4, may be regarded as having an average polarization conversion efficiency at least equal to 90% which is satisfactory in this application.

However, if the numerical aperture NA of the beams exceeds 0.4, the angle of incidence $\theta$ becomes too high to consider the biaxial layer 12 as acting as a quarter-wave plate with respect to a ray running along the u-axis. In other words, the retardation difference $\Delta\phi$ between the two polarizations of such a ray is so substantially different from $\pi/2$ that the polarization conversion efficiency thereof decreases well under 90%.

For a ray running along the u-axis, one polarization eigenmode has a y-polarization with refractive index $n_y$ and the other with a polarization in the xz plane has an effective refractive index $n(\theta, N_z)$ given by :

$$n(\theta,N_z)=n_x.n_z(N_z)/(n_z^2(N_z).\cos^2(\theta)+n_x^2.\sin^2(\theta))^{\frac{1}{2}}$$

leading to :

$$\Delta\Phi(\theta,N_z)=\pi.(n(\theta,N_z)-n_y)/(2.\Delta n.\cos(\theta))$$

In Figure 3 are shown the variations of $\Delta\phi(\theta,N_z)$ as a function of $\theta$ for three values of $N_z$ : 0 (solid line), 1/2 (dotted line) and 1 (dashed line).

It can be seen that for $N_z=0$, the material is uniaxial ($n_z=n_y$) and the retardation difference strongly decreases as $\theta$ increases. For $N_z=1$, the material is also uniaxial ($n_z=n_x$) and the retardation difference strongly increases as $\theta$ increases. However, for $N_z=1/2$, the material is biaxial with $n_z=(n_x+n_y)/2$ and the retardation difference is rather insensitive to the angle of incidence and remains roughly equal to $\pi/2$. This leads to the conclusion that, when the biaxial material is chosen so that $N_z$ is about ½, the biaxial layer 12 acts as a quarter-wave plate in a large range of angles of incidence, i.e. a large range of numerical apertures NA, and thus provides a high polarization conversion efficiency.

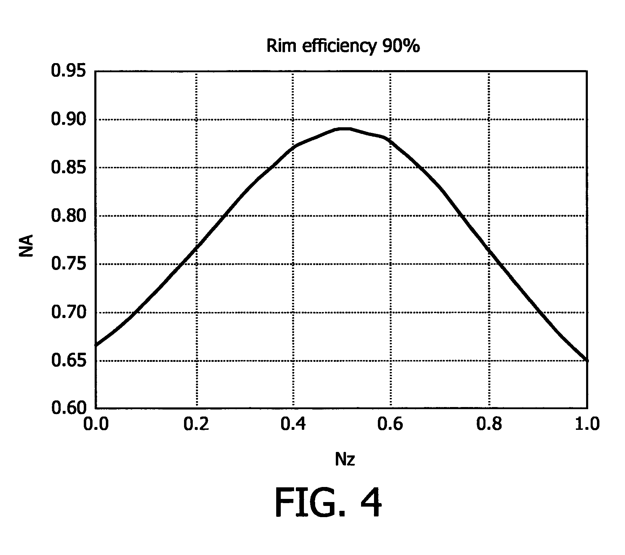

Figure 4 is a plot of the numerical aperture NA of a beam as a function of the parameter $N_z$ for a rim conversion efficiency of 90%. It is understood that the rays coming from the rim of a lens have the largest angles of incidence $\theta$ with respect to the z-axis and therefore the smallest conversion efficiency, as shown in Figure 3. At the same time, these rays are those which determine the spot size and are thus the most important ones. Consequently, the conversion efficiency for these rays should be large, at least 90%.

It can be deduced from Figure 4 that, in order to keep the conversion efficiency above 90% for all rays coming from a lens with a numerical aperture NA of 0.85, the refractive index $n_z$ along the z-axis has to be restricted such that the parameter $N_z$ fulfills the conditions : $0.35<N_z<0.65$.

Biaxial quarter-wave plates complying with the recommendations of the invention are commercially available from the Nitto Denko Corporation. These biaxial quarter-wave plates use, for instance, biaxially stretched polymers.

## Claims

1. A reflective holographic data storage carrier (10) comprising a photosensitive layer (13), a reflecting layer (11) and a quarter-wave plate layer (12) disposed between said photosensitive layer and said reflective layer, **characterised in that** said quarter-wave plate layer being made of a biaxial material having refractive indices $n_x$, $n_y$ and $n_z$ along the x-, y- and z-axis respectively, wherein said refractive indices satisfy:

$$n_x>n_z>n_y \qquad \text{and} \qquad n_z=n_y+N_z(n_x-n_y)$$

where z is a direction perpendicular to said layers and $N_z$ ranges between 0.35 and 0.65.

## Patentansprüche

1. Reflektierender holographischer Datenspeicherträger (10), der eine lichtempfindliche Schicht (13), eine reflektierende Schicht (11) und eine zwischen der lichtempfmdlichen Schicht und der reflektierenden Schicht liegende Lambdaviertelplatten-Schicht (12) umfasst, **dadurch gekennzeichnet, dass** die Lambdaviertelplatten-Schicht (12) aus einem zweiachsigen Material hergestellt ist, das entlang der x-, y- bzw. z-Achse Brechzahlen $n_x$, $n_y$ und $n_z$ aufweist, wobei für die Brechzahlen gilt:

$$n_x>n_z>n_y \qquad \text{und} \qquad n_z=n_y+N_z(n_x-n_y)$$

wobei z eine Richtung senkrecht zu den genannten Schichten ist und $N_z$ zwischen 0,35 und 0,65 liegt.

**Revendications**

1. Support de stockage de données holographiques réfléchissant (10) comprenant une couche photosensible (13), une couche réfléchissante (11) et une couche de plaque en quart d'onde (12) qui est déposée entre ladite couche photosensible et ladite couche réfléchissante, **caractérisé en ce que** ladite couche de plaque en quart d'onde est fabriquée à partir d'un matériau biaxial ayant des indices de réfraction $n_x$, $n_y$ et $n_z$ le long de l'axe x, y et z, respectivement, dans laquelle lesdits indices de réfraction satisfont à:

$$n_x > n_z > n_y \qquad \text{et} \qquad n_z = n_y + N_z(n_x - n_y)$$

où z est une direction qui est perpendiculaire audites couches et où $N_z$ se situe dans la gamme comprise entre 0,35 et 0,65.

Mirror
1/4 λ plate
HDS medium

0.5R$_S$   0.5R$_P$

0.5S$_S$   0.5S$_P$

Lens

1/2 λ plate

0.5R$_S$   0.5R$_P$

PBS

Mirror

SLM

50/50   Lens

Mirror   1N$_P$   Laser

0.5S$_P$

Detector

# FIG. 1

FIG. 2

Retardation change with angle

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003039001 A
- US 2004165518 A